# EUROPEAN PATENT APPLICATION

(11) **EP 2 724 649 A1**
(43) Date of publication of application: **30.04.2014**
(21) Application number: 13189787.8
(22) Date of filing: 22.10.2013
(51) Int. Cl.: A47G 25/06, A47K 10/12

(54) **Hanging system**

(30) Priority: 26.10.2012 GB 201219270
(71) Applicant: Telling, Peter, Hornchurch, Essex RM11 1PF (GB)
(72) Inventor: Telling, Peter, Hornchurch, Essex RM11 1PF (GB)
(74) Representative: Granleese, Rhian Jane

(57) **Abstract**

A hanging system (100) comprises at least one mountable component (200)which may be mounted onto a mounting board (300) before the system (100) is mounted onto a surface. The mountable component (200) comprises a cylindrical spigot (210) with a key (212) extending radially from the spigot (210). The mounting board (300) forms a cavity which may receive the mountable component (200). The cavity forms a cylindrical spigot hole (312)which is configured to receive the spigot (210). A first keyway extends from the spigot hole (312) allowing the key (212) to pass fully through the mounting board (300). A second keyway (314)is configured to receive the key (212) such that, when the system (100) is mounted onto a surface, the mountable component (200) is secured in the mounting board (300) by the surface.

## Description

### FIELD OF THE INVENTION

Embodiments of the present invention relate generally to a system comprising a mounting board and a mountable component. Further embodiments include hanging devices which may be assembled before being mounted upon a surface.

### BACKGROUND

Typical hanging devices consist of one or more hooks which are mounted within cavities in a mounting board which may in turn be mounted on a wall or other surface. Hanging devices may be provided unassembled to be put together by the user. Such ready-to-assemble devices may be packaged more compactly and are therefore more cost-effective to store and transport than preassembled devices.

For ease of assembly it is often advantageous to design ready-to-assemble devices such that no tools are required in their assembly. This provides the additional benefit of reducing manufacturing costs as no additional fixings, such as nails or screws, need be provided. Whilst tool-less assembly may be simpler and cheaper, it may result in the system being less stable during use. This is particularly problematic for hanging devices which are under strain when in use. It would therefore be beneficial to provide a mountable component and mounting board system which is easy to assemble, but which provides stable support.

### SUMMARY OF THE INVENTION

In accordance with one aspect of the invention there is provided a system comprising a mounting board and a mountable component. The mountable component comprises a cylindrical spigot and a key extending radially from the spigot. The mountable component is configured to be received within a cavity in the mounting board. The mounting board has a rear face configured to be mounted against a surface. The cavity extends through the mounting board forming a cylindrical spigot hole configured to receive the spigot of the mountable component, a first keyway configured to allow the key to pass fully through the mounting board and a second keyway configured to receive the key such that, when the system is mounted against a surface, the mountable component is secured in the mounting board by the surface.

This system may be easily assembled by the user without the use of tools before it is mounted onto a wall or other surface. The surface upon which the system may be mounted may form part of a wall, a door, or may be any other type of surface which may provide support for the system. The system may be manufactured from a variety of rigid materials such as wood, plastic, and/or metal. The system may be mounted onto the surface through the use of screws, nails, adhesive or any other means of fixing. Once the system is mounted onto a surface, the mountable component may not be removed from the mounting board without the system first being separated from the surface. The mountable component is therefore secured in the mounting board by the surface. This can be achieved by providing a second keyway which is only open at the rear face of the mounting board. Once the key has been positioned within the second keyway and the system has been mounted onto a wall, the wall blocks the rear opening of the second keyway preventing the key from being removed and thereby securing the mountable component within the mounting board. This system therefore has the advantages of being easy to assemble, whilst also gaining the benefit of a strong securing mechanism for mounting the mountable component.

The mountable component may further comprise a cylindrical base, or shoulder, from which the spigot protrudes. The cylindrical base may have a greater radius than the spigot and may have a longitudinal axis which is aligned with the longitudinal axis of the spigot. The circular cross-sections of the cylindrical base and the spigot may be concentric with each other. The cavity in the mounting board may further form a cylindrical counterbore, into which the spigot hole opens, the counterbore being arranged to receive the cylindrical base of the mountable component. The cavity would therefore form a spigot hole forming an opening in the rear face of the mounting board and a counterbore which forms an opening in the opposite face, that is, the front face. The counterbore and the spigot hole form a cavity which extends through the mounting board. The spigot hole and the counterbore may be arranged concentrically. In order for the key to be able to easily pass into the first keyway, it is advantageous for the key to extend from the spigot no further than the radius of the counterbore and/or the radius of the cylindrical base. The cylindrical base of the mountable component, which fits within the counterbore of the mounting board, provides a strong support for the mountable component when mounted. Furthermore, the cylindrical base and the counterbore prevent the whole of the mountable component from passing through the mounting board and falling out of the rear face. This results in a system which is easier to assemble and mount onto a surface.

Preferably, the cylindrical base and the counterbore are configured to form an interference fit. Equally, it is advantageous for the spigot and the spigot hole to be configured to have an interference fit. Furthermore, it is beneficial for the key and the second keyway to be configured to have an interference fit. An interference fit is where there is a tight fit between two mating parts which results in friction which helps fasten the two parts together. Any excess space between the mounting board and the mountable component may result in unwanted movement. An interference fit therefore allows the mountable component to be mounted solidly within the mounting board.

Preferably, the system is arranged such that the length of the spigot is greater than the length of the spigot hole. Beneficially, the system is arranged such that the difference in length between the spigot and the spigot hole is greater than the distance that the key extends along the length of the spigot. This allows the key to fully exit the first keyway at the rear face of the mounting board such that the mountable component may be rotated and the key to may be positioned within the second keyway.

Preferably, the second keyway is formed such that when the key is received within the second keyway, the mountable component is prevented from being rotated. It is beneficial, as mentioned earlier, for the key to fit tightly within the second keyway to prevent the mountable component from moving within the cavity once mounted.

It is beneficial for the first and second keyways to extend radially from the spigot in two separate directions. In other words, the two keyways form two channels which run down the length of the spigot hole without intersecting. This prevents the key from moving between the two keyways whilst the system is mounted onto a surface. Preferably, the two keyways form straight channels running parallel to the longitudinal axis of the spigot hole and perpendicular to the front and back faces of the mounting board. Preferably, the first and second keyways radially extend from the spigot hole in directions 90 degrees from each other. This means that the mounting board may be mounted onto a surface such that the first keyway radially extends from the spigot hole in a direction parallel to the horizontal and the second keyway radially extends from the spigot hole in a direction parallel to the vertical. This arrangement is advantageous as the first keyway would therefore have a minimal effect on the load bearing properties of the cavity. Furthermore, once the mountable component is mounted, the key would experience minimal torque due to gravity as the majority of the load would be directed along its length.

The system may be arranged such that the component comprises a hook. The hook would be located at the opposite end of the mountable component such that, once the mountable component is mounted onto the mounting board, the hook protrudes from the front face of the mounting board. It is advantageous for the hook to extend in the same plane as the key. The hook may be angled or curved along a plane parallel to the direction in which the key radially extends from the spigot. Provided that the system is mounted such that the second keyway is directed along the vertical, this arrangement should result in the load on the key being directed along its length.

Whilst, for the sake of simplicity, the system has been described as having one mountable component which may be mounted within one cavity in a mounting board, it will be appreciated that the mounting board may form multiple cavities for receiving multiple mountable components.

### BRIEF DESCRIPTION OF THE DRAWINGS

In the following, embodiments of the present invention will be described by way of example only and with reference to the accompanying drawings in which:
Figure **1** shows a mountable component and mounting board system in accordance with an embodiment of the invention;
Figure **2** shows front, rear and side views of a mountable component in accordance with an embodiment of the invention;
Figure **3A** shows a rear view of a mounting board in accordance with an embodiment of the invention;
Figure **3B** shows a cross-sectional view of a mounting board in accordance with an embodiment of the invention;
Figure **3C** shows a front view of a mounting board in accordance with an embodiment of the invention; and,
Figure **4** shows an exploded view of a mountable component and mounting board system in accordance with an embodiment of the invention.

### DETAILED DESCRIPTION

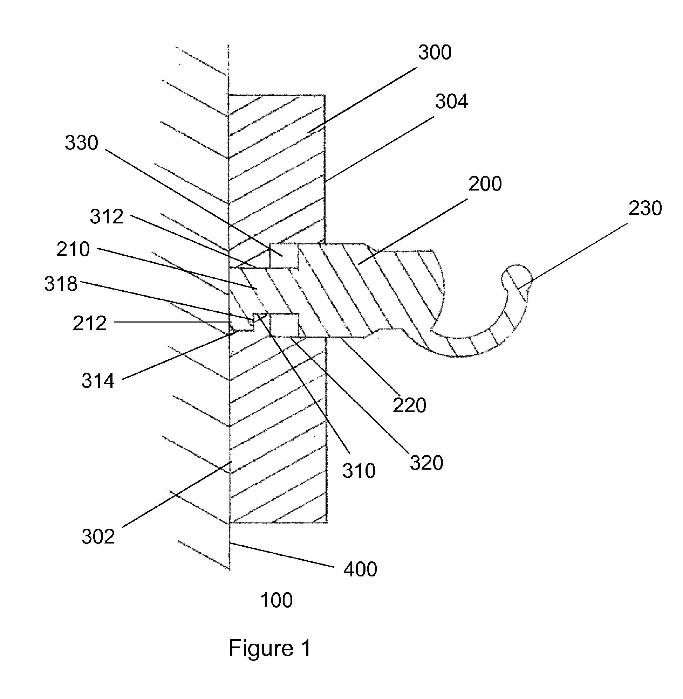

Figure **1** shows a mountable component and mounting board system **100** in accordance with an embodiment of the invention. A mountable component **200** is mounted within a cavity **310** formed within a mounting board **300.** The mountable component **200** is an attachment which may be secured within the mounting board **300.** The mounting board **300** is a supporting base, or back board, which may be secured against a wall or other surface. A rear face **302** of the mounting board **300** is mounted against a surface **400,** such as a wall. The cavity **310** extends between the openings in the front **304** and rear **302** faces of the mounting board **300.** The cavity **310** forms a cylindrical spigot hole **312** which forms an opening in the rear face **302,** and a cylindrical counterbore **320** which forms an opening in the front face **304** of the mounting board **300.** The spigot hole **312** and counterbore **320** open onto each other. The spigot hole **312** and counterbore **320** intersect forming a passageway through the mounting board **300.** The spigot hole **312** and counterbore **320** positioned such that their longitudinal axes are aligned. The spigot hole **312** and counterbore **320** therefore form a cavity comprising two concentric cylindrical cavities intersecting end to end. The radius of the counterbore **320** is greater than the radius of the spigot hole **312.**

The mountable component **200** comprises a cylindrical spigot **210** which protrudes from a cylindrical base **220.** The cylindrical spigot **210** and the cylindrical base **220** are arranged concentrically. The spigot **210** fits within the spigot hole **312** of the cavity **310.** A key **212** radially protrudes from the spigot **210** at the far end of the spigot **210** from the cylindrical base **220.** The key **212** does not protrude further than the radius of the counterbore **320** or the radius of the cylindrical base **220.** The radius of the spigot **210** is greater than the height of the key **212.** The key **212** fits within a blind keyway **314** which opens at the rear face **302** of the mounting board **300.** The blind keyway **314** has a sufficient width to allow the key **212** to fit within it. The blind keyway **314** extends from the rear face **302** along a portion of the edge of the spigot hole **312** before ending at an end face **318.** The end face **318** ensures that the key **212** cannot pass directly out of the opening in the front face **304** from the blind keyway **314.** Preferentially, the blind keyway **314** has a depth which is substantially the same as the height of the key **212** of the mountable component **200.** This would mean that when the key **212** is fully inserted into the blind keyway **314,** the end of the spigot **210** would be flush with the rear face **302** of the mounting board **300.** The cylindrical base **220** is positioned so that its longitudinal axis is aligned with the longitudinal axis of the spigot **210.** The radius of the cylindrical base **220** is greater than the radius of the spigot **210** and the height of the key **212** combined. Therefore, the key **212** does not protrude from the spigot further than the radius of the cylindrical base **210.** The base **220** of the mountable component **200** fits within the counterbore **320** providing a limit to the extent that the mountable component **200** may be inserted into the cavity **310.**

When mounted on the mounting board **300** the mountable component **200** protrudes from the front face **304** of the mounting board **300** and the end of the spigot **210** is flush with the rear face **302.** A hook **230** for hanging objects protrudes from the opposite end of the mountable component **200** to the spigot **210.** The length of the spigot **210** and the depth of the counterbore **320** are such that when the mountable component is mounted, a gap **330** remains between the cylindrical face of the counterbore **320** and the cylindrical base **220** of the mountable component **200.** This gap **330** is longer than the length that the key **212** extends down the length of the spigot **210** in order to allow the mountable component **200** to be further inserted into the cavity **310** moving the key **212** fully out of the blind keyway **314.** The spigot **210** must therefore have a length which is over twice the distance that the key **212** extends down the length of the spigot **210.** This is required to allow the key **212** to be moved fully out of the blind keyway **314.** Once the system **100** is assembled and mounted onto a surface **400,** the surface **400** prevents the key **200** from being moved out of the blind keyway **314** and thereby secures the mountable component **200** within the mounting board **300.** Once the system **100** is mounted the end of the spigot **210** is flush with the surface **400.** The end of the spigot **210** is therefore supported by the surface **400.**

The mountable component **200** and mounting board **300** may be made of metal, wood, plastic or any other substance of sufficient rigidity and strength. Preferentially, the mounting board **300** is made of wood which is cheap and easy to machine accurately. The mountable component **200** may be cored out, or cast, moulded or fabricated so as to be hollow in order to reduce material usage and machine cycle times in manufacture. Preferentially, the dimensions of the mountable component **200** and the mounting board **300** are such that there is an interference fit between the mountable component **200** and the mounting board **300,** that is, the spigot hole **312** and the spigot **210** have similar radii, the counterbore **320** and the cylindrical base **220** have the similar radii, and/or the key **212** and the blind keyway **314** have a similar width, height/depth and/or length.

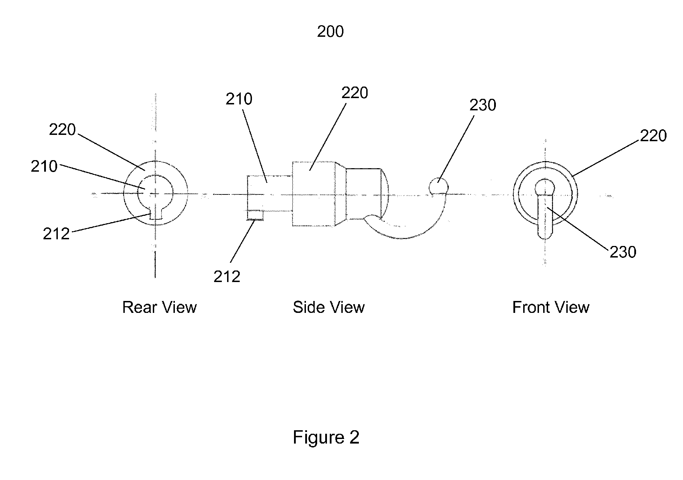

Figure **2** shows front, rear and side views of a mountable component **200** in accordance with an embodiment of the invention. A cylindrical spigot **210** protrudes from the centre of a cylindrical base **220** of the mountable component **200.** The radius of the cylindrical base **220** is greater that the radius of the spigot **210.** A hook **230** protrudes from the opposite end of the mountable component **200** to the spigot **210.** The hook **230** is curved. A key **212** radially protrudes from the spigot **210** at the far end of the spigot **212** from the cylindrical base **220.** The key **212** is a rectangular protrusion from the cylindrical spigot **210.** The key **212** does not extend beyond the radius of the cylindrical base **220.** The height of the key **212** is less than the radius of the spigot **210.** The key **212** extends partially down the length of the spigot **210.** The length of the spigot **210** is greater than twice the length of the key **212.** The key **212** protrudes from the spigot **210** in a direction parallel to the plane in which the hook **230** lies, that is, the plane in which the hook **230** is curved. Therefore the hook **230** extends in the same plane as the key **212.** The end of the hook **230** is directed in the opposite direction to that in which the key **212** protrudes from the spigot **210.**

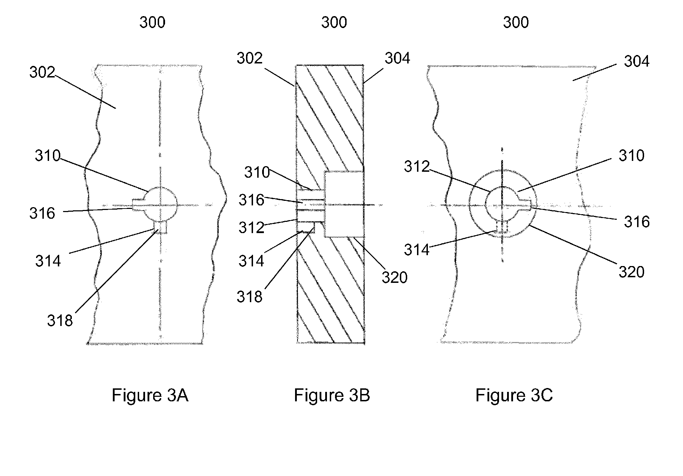

Figure **3A** shows a rear view of a mounting board **300** in accordance with an embodiment of the invention. A cavity **310** extends through the mounting board **300** forming a cylindrical spigot hole **312** which has an opening in the rear face **302** of the mounting board **300.** The mounting board **300** is configured to be mounted onto a surface **400** with the rear face **302** facing the surface **400.** An open keyway **316** extends through the mounting board **300** forming a rectangular channel running along the edge of the spigot hole **314** and forming openings at the front **304** and rear **302** faces. The open keyway **316** extends radially outwards from the spigot hole **312** in a first direction. A blind keyway **314** forms a recess in the rear face **302** forming a channel which runs along the edge of the spigot hole **312,** partially through the mounting board **300.** The blind keyway **314** opens at the rear face **302.** The blind keyway **314** extends radially from the spigot hole **314** in a second direction at a right angle to the first direction.

When the mounting board **300** is mounted onto a surface **400,** it is beneficial for the blind keyway **314** to be directed vertically, preferably downwards. This means that when the mountable component **200** is mounted onto the mounting board **300,** the key **212** experiences the greatest force, due to gravity, along its strongest axis running from its tip to its base. Furthermore, it is preferential for the open keyway **316** to be directed at 90 degrees to the blind keyway **314,** along the horizontal, so that it has a minimal effect on the load bearing properties of the spigot hole **312.**

Figure **3B** shows a cross-sectional view of the mounting board **300** in accordance with an embodiment of the invention. The spigot hole **312** extends though the mounting board **300** from an opening in the rear face **302.** The spigot hole **312** opens onto a cylindrical counterbore **320** which extends through the mounting board **300** forming an opening in the front face **304** of the mounting board **300.** The front face **304** is the opposite face of the mounting board **300** to the rear face **302.** The mounting board **300** is arranged such that when it is mounted upon a surface **400,** the front face **304** faces away from the surface **400** and the rear face **302** is mounted against the surface **400.** The radius of the counterbore **320** is greater than the radius of the spigot hole **312** and the counterbore **320** has its longitudinal axis aligned with the longitudinal axis of the spigot hole **312.** Therefore, the cavity **310** is formed from two cylindrical cavities which concentrically intersect. The open keyway **316** forms a rectangular channel running down the length of the cylindrical spigot hole **312** forming openings at the rear face **302** at one end and the counterbore **320** at the other. The open keyway **316** extends radially outwards from the spigot hole **312** in a first direction. The blind keyway **314** forms a rectangular channel extending radially from the spigot hole **312** and running along the part of the length of the spigot hole **312.** The blind keyway **314** opens onto the rear face **302** of the mounting board **300.** Unlike the open keyway **312,** the blind keyway **314** does not extend along the full length of the spigot hole **312** to the counter bore **320.** The blind keyway **314** extends partially along the edge of the spigot hole **314** before ending at an end face **318.** The end face **318** of the blind keyway **314** runs parallel to the front **304** and rear **302** faces of the mounting board **300.** The end face **318** prevents the key **212** of the mountable component **200** from exiting the mounting board **300** at the front face **304** without first moving out of the blind keyway **314** at the rear face **302** and passing through the open keyway **316.**

Figure **3C** shows a front view of the mounting board **300** in accordance with an embodiment of the invention. The counterbore **320** opens onto the front face **304** of the mounting board **300.** The radius of the counterbore **320** is greater than the radius of the spigot hole **312** and the depth of the open keyway **316** combined. The blind keyway **314** does not open onto the counterbore **320.**

In order to assemble the system **100,** the mountable component **200** must be inserted into the mounting board **300** before the mounting board **300** is mounted onto a surface **400.** To insert the mountable component **200** into the mounting board **300** the mountable component **200** must be rotated so that the key **212** may pass through the open keyway **316.** In order to mount the mountable component **200** onto the mounting board **300,** the key **212** must pass through the open keyway **316** and fully exit the open keyway **316** at the rear face **302.** The cylindrical base **220** of the mountable component **200** prevents the mountable component **200** from passing all the way through the cavity **310.** Once the mountable component **200** has been fully inserted and the key **212** has fully exited the open keyway **316,** the mountable component **200** may then be rotated to align the key **212** with the blind keyway **314.** The mountable component **200** may then be moved to position the key **212** within the blind keyway **314** to provide an arrangement like that shown in Figure **1****.**

The mountable component **200** may not be rotated without moving the key **212** out of the blind keyway **314.** As the blind keyway **314** extends only partially along the length of the spigot hole **312** and does not intersect with the counterbore **320.** The end face **318** prevents the key **212** from exiting the cavity **310** at the front face **304** directly from the blind keyway **314.** The mountable component **200** may not be removed from the mounting board **300** without first moving the key **212** out of the blind keyway **314** opening in the rear face **302** of the mounting board **300.** Only then may the mountable component **200** be rotated to allow the key **212** to pass through the open keyway **316** and therefore allow the mountable component **200** to be removed from the mounting board **300.** Therefore, when the system **100** is mounted onto a surface **400,** said surface **400** prevents the key **212** from being moved out of the blind keyway **314** and thereby secures the mountable component **200** within the mounting board **300.** The key **212** may not be moved out of the blind keyway **314** when the system **100** is mounted as the surface **400** occludes the opening of the blind keyway **314** in the rear face **302** of the mountable component **300.**

The system provided allows a mountable component **200** to be mounted onto a mounting board **300** without the use of tools. The mountable component **200** is secured in the mounting board **300** once the system has been secured to a surface **400.** This simple mounting action provides a solid support for the mountable component **200** by using the surface **400** onto which the system is mounted to help secure the mountable component **200.** The surface **400** prevents the key **212** of the mountable component **200** from moving out of the blind keyway **314** and therefore prevents the mountable component **200** from falling out of the mounting board **300** during use. Furthermore, as the end of the spigot **210** is positioned against the surface **400,** the surface **400** provides support for the mountable component **200.** The mountable component **200** is therefore provided with the advantages of a strong securing mechanism without the need to fix it to the mounting board **300** using tools and fixtures such as nails or screws. The system provided is therefore cheap and simple to manufacture and assemble.

The radius of the spigot **210** may be half the radius of the radius of the cylindrical base **220.** The height of the key **212** may be two thirds of the difference between the radii of the spigot **210** and the cylindrical base **220.** The key **212** may have a square cross section with an equal width and height. The spigot **210** and the cylindrical base **220** may have similar lengths. The length of the key **212** may be over a third but less than half of the length of the spigot **210.**

In a preferred embodiment, the radius of the spigot **210** is 3 mm, the radius of the cylindrical base **220** is 6 mm, the height and width of the key **212** is 2 mm, the length of the spigot **210** is 8.5 mm, the length of the cylindrical base **220** is 8 mm whilst the length of the key **212** is 3 mm.

In order to provide an interference fit, the radii of the spigot hole **312** and counterbore **320** may be the same as the radii of the spigot **210** and the cylindrical base **220.** Furthermore, the width of the blind keyway **314** may be the same as the width of the key **212.** In order to allow the key **212** to pass easily through the open keyway **316,** the width of the open keyway **316** may be up to 10% greater than the width of the key **212.** Furthermore, the total radii of the open **316** and blind **314** keyways may be up to 10% greater than the total radius the of the key **212,** that is, the height of the key **212** plus the radius of the spigot **210.** The lengths of the spigot hole **312,** the counterbore **320** and the blind keyway **314** may be the same as the lengths of the spigot **210,** the cylindrical base **220** and the key **212.**

In the preferred embodiment mentioned above, the radii of the spigot hole **312** and counterbore **320** may be 3 mm and 6 mm respectively. Furthermore, the width of the open **316** and blind **314** keyways may be 2.2 and 2 mm respectively. The radii of the open **316** and blind **314** keyways may be 5.5 mm and the height of the two keyways may be 2.5 mm.

The above dimensions may be scaled by up to a factor of two so that greater weights may be supported by the system.

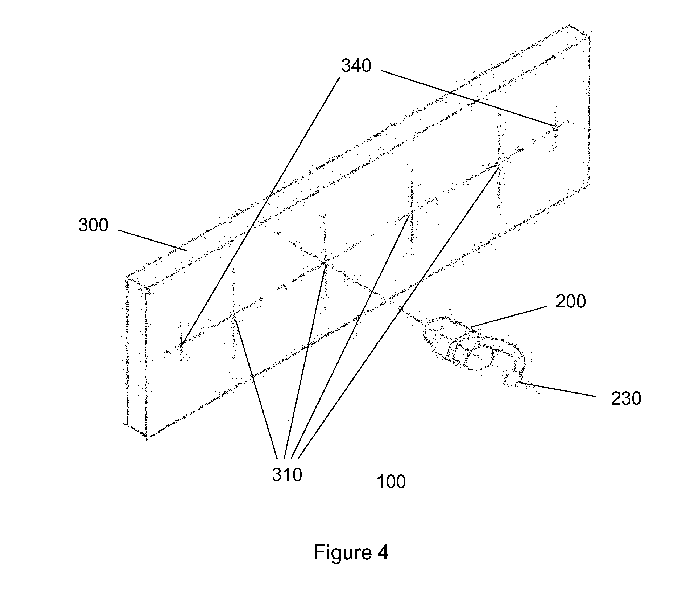

Figure **4** shows an exploded view of the mountable component **200** and mounting board **300** system in accordance with an embodiment of the invention. In the embodiment, the mounting board **300** is a rectangular parallelepiped with a thickness which is shorter than its length or width. The mounting board **300** has multiple cavities **310,** each like the cavities depicted in figures **1****,** **3A, 3B** and **3C****,** for receiving multiple mountable components **200.** The mounting board **300** also has board fixing holes **340** for securing the mounting board **300** to a surface **400.**

It should be noted that whilst the mountable component **200** is described as having a hook **230,** the invention is not restricted to hooks and may include attaching other mountable components **200** such as signs, pictures etc. Equally, whilst the embodiment includes a counterbore **320,** and cylindrical base **220** of the mountable component **200,** these are not required.

Whilst certain embodiments have been described above, the embodiments have been presented by way of example only and are not intended to limit the scope of protection. It should be understood that the invention is not limited to the specific aspects and embodiments described above and that a variety of modifications, additions and deletions are within the scope of the invention as defined by the following claims.

## Claims

1. A system comprising a mounting board and a mountable component;
the mountable component comprising a cylindrical spigot and a key extending radially from the spigot, the mountable component being configured to be received within a cavity in the mounting board;
the mounting board having a rear face configured to be mounted against a surface, the cavity extending through the mounting board forming:
a cylindrical spigot hole configured to receive the spigot of the attachment;
a first keyway configured to allow the key to pass fully through the mounting board; and,
a second keyway configured to receive the key such that, when the system is mounted against a surface, the mountable component is secured in the mounting board by the surface.

2. The system of claim 1 wherein the mountable component further comprises a cylindrical base from which the spigot protrudes, the cylindrical base having a greater radius than the spigot and having a longitudinal axis which is aligned with the longitudinal axis of the spigot.

3. The system of claim 2 wherein the cavity further forms a cylindrical counterbore, into which the spigot hole opens, the counterbore being arranged to receive the cylindrical base of the mountable component.

4. The system of claim 3 wherein the cylindrical base of the mountable component and the counterbore of the mounting board are configured to have an interference fit.

5. The system of any preceding claim wherein the system is arranged such that the length of the spigot is greater than the length of the spigot hole.

6. The system of claim 5 wherein the system is arranged such that the difference in length between the spigot and the spigot hole is greater than the distance that the key extends along the length of the spigot.

7. The system of any preceding claim wherein the spigot and the spigot hole are configured to have an interference fit.

8. The system of any preceding claim wherein the key and second keyway are configured to have an interference fit.

9. The system of any preceding claim wherein the second keyway is formed such that when the key is received within the second keyway, the mountable component is prevented from being rotated.

10. The system of any preceding claim wherein the first and second keyways radially extend from the spigot hole in directions 90 degrees from each other.

11. The system of any preceding claim wherein the component comprises a hook.

12. The system of claim 11 wherein the hook is extends in the same plane as the key.

13. The system of any preceding claim wherein the mounting board forms multiple cavities for receiving multiple mountable components.
